## Europäisches Patentamt
## European Patent Office
## Office européen des brevets

(19) ))

(11) Numéro de publication: **0 219 748**
**B1**

(12) **FASCICULE DE BREVET EUROPEEN**

(45) Date de publication du fascicule du brevet:
**04.01.89**

(51) Int. Cl.⁴: **G01L 1/16**

(21) Numéro de dépôt: **86113718.0**

(22) Date de dépôt: **03.10.86**

(54) Capteur de force comprenant un résonateur dont la fréquence varie en fonction de la force appliquée.

(30) Priorité: **10.10.85 FR 8515163**

(43) Date de publication de la demande:
**29.04.87 Bulletin 87/18**

(45) Mention de la délivrance du brevet:
**04.01.89 Bulletin 89/1**

(84) Etats contractants désignés:
**CH DE GB IT LI NL SE**

(56) Documents cités:
**FR-A- 1 522 971**
**US-A- 4 361 199**
**US-A- 4 372 173**

(73) Titulaire: **ASULAB S.A., Faubourg du Lac 6,
CH-2501 Bienne(CH)**

(72) Inventeur: **Mussard, Yves, 33, rue de la Côte,
CH-2000 Neuchâtel(CH)**
Inventeur: **Christen, Michel, Grand'Rue 189,
CH-2036 Cormondrèche(CH)**

(74) Mandataire: **Gresset, Jean et al, ICB Ingénieurs Conseils
en Brevets SA Passage Max. Meuron 6,
CH-2001 Neuchâtel(CH)**

ACTORUM AG

## Description

La présente invention se rapporte aux capteurs de force du type comportant un résonateur dont la fréquence varie en fonction de l'intensité de la force appliquée. Elle se rapporte plus précisément à un capteur comportant un barreau oscillant et deux embases reliées rigidement chacune à l'une des extrémités du barreau et servant à appliquer la force à mesurer sur le barreau.

De tels capteurs sont décrits notamment dans le brevet US-A 4 372 173. Dans ce brevet, le résonateur est en quartz mince usiné par un procédé photochimique, et ayant la forme soit d'un barreau, soit d'un double diapason. Ce type de résonateur a pour avantage d'avoir un facteur de qualité élevé et une grande sensibilité à l'application d'une force. Il en résulte que la mesure peut être précise. De plus, l'information associée à la fréquence du résonateur étant traitée par un circuit électronique, il est possible de l'obtenir sous forme numérique plutôt qu'analogique, ce qui offre de nombreux avantages. Malheureusement, l'utilisation d'un résonateur à quartz rend le dispositif fragile. C'est pourquoi, à ce jour, ce type de capteur a avant tout été utilisé en laboratoire.

Un but de la présente invention est de réaliser un capteur de force pouvant aussi être utilisé dans un environnement plus rigoureux.

Par ailleurs, les capteurs du type décrit ci-dessus, sont non seulement sensibles à l'application d'une force axiale, ils réagissent également à des forces induisant une flexion ou une torsion du capteur. Or, dans la plupart des cas, il est souhaité que seule l'une des composantes de la force soit active, celle orientée selon l'axe du barreau du résonateur.

Un autre but de la présente invention est de réaliser un capteur de force tel que défini ci-dessus et dont la sensibilité directionnelle relative est accrue dans la direction de l'axe du barreau.

Ces buts sont atteints grâce au fait que le capteur comporte un tube entourant le résonateur et fixé rigidement par chacune de ses extrémités à l'une des embases.

L'invention sera mieux comprise à la lecture de la description qui va suivre, faite en référence aux dessins dans lesquels:

- la figure 1 représente, en perspective, un capteur selon l'invention;
- la figure 2 est un schéma équivalent des caractéristiques mécaniques du capteur de la figure 1;
- la figure 3 illustre la manière dont varie la fréquence, dans un capteur dont certains composants sont sujets au fluage; et
- la figure 4 est un diagramme comportant une courbe montrant l'évolution de la sensibilité d'un capteur en fonction de l'épaisseur du tube.

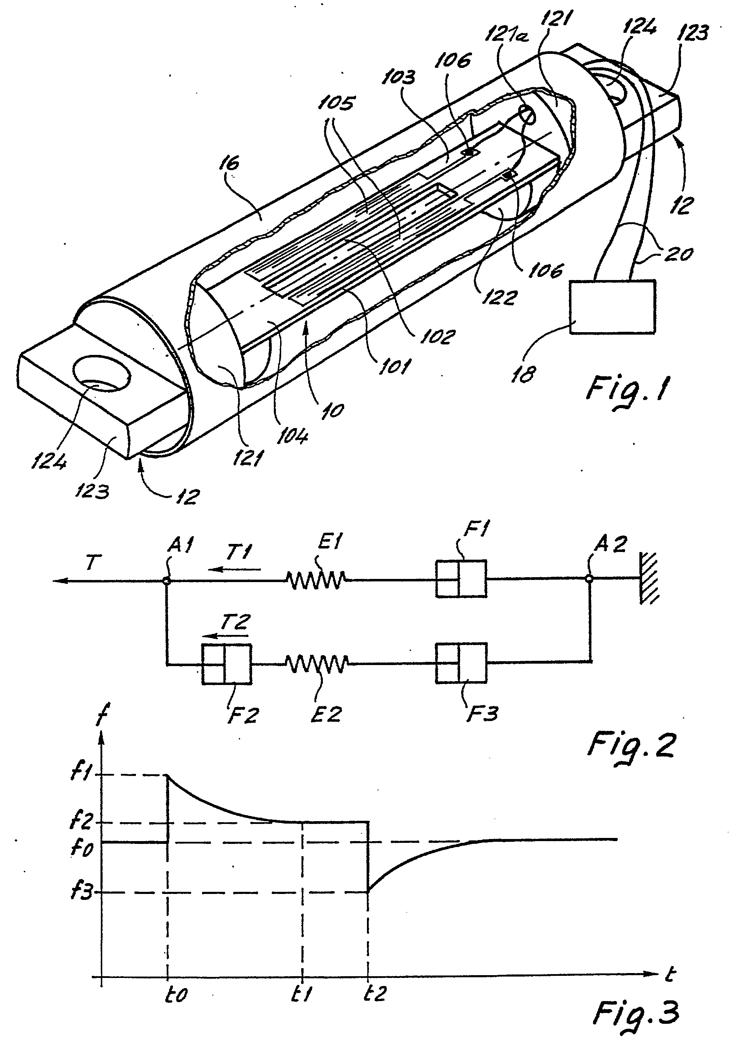

Le dispositif selon l'invention représenté à la figure 1 comporte un résonateur 10, deux supports 12, un tube 16, un circuit de commande et de mesure schématiquement représenté en 18 et des fils 20 reliant le résonateur au circuit 18. Plus précisément, le résonateur est du type double diapason et comporte deux barreaux 101 et 102 reliés à chacune de leurs extrémités par une base 103, respectivement 104. Les barreaux 101 et 102 portent des électrodes 105 schématiquement représentées et permettant l'entretien de la vibration du résonateur. La base 103 porte des bornes de sortie 106, reliées aux électrodes 105, et sur lesquelles sont soudés les fils 20, pour relier le résonateur au circuit 18. Chacun des supports 12 comporte une première partie 121, de forme cylindrique, de diamètre légèrement inférieur au diamètre intérieur du tube 16 et collée contre la face intérieure de ce dernier, à l'une de ses extrémités. L'une de ces parties 121 est percée d'un trou 121a, d'orientation axiale et destiné à laisser sortir les fils 20 de l'intérieur du tube. Les supports 12 comportent en outre chacun une assise de résonateur 122, adjacente à la partie 121, de forme semi-cylindrique, et destinée à supporter le résonateur 10. Plus précisément, les bases 103 et 104 sont collées chacune sur l'une des assises 122. Les supports 12 comportent enfin chacun une attache 123, percée d'un trou 124 d'orientation radiale, destinée à permettre l'application d'une force sur le capteur et plus précisément sur le résonateur 10. Ces attaches 123 sont de forme générale parallélépipédique, la largeur étant sensiblement égale au diamètre du cylindre formant les parties 121. Elles se trouvent bien entendu à l'extérieur du tube.

Les supports 12 et les bases 103 et 104 forment des embases destinées à appliquer la force aux barreaux 101 et 102 et auxquelles le tube est fixé rigidement par ses extrémités.

Le tube 16, les supports 12 et les colles utilisées pour l'assemblage doivent remplir certaines conditions pour ne pas altérer la précision de capteur; il faut notamment que le résonateur ne soit pas soumis à d'autres contraintes que celle exercée par la force à mesurer. Cela revient à éliminer ou tout au moins compenser les contraintes générées par le fluage ou la dilatation de l'un ou l'autre des composants constituant le capteur. Pour comprendre la manière dont ces contraintes peuvent être générées, on peut se référer à la figure 2 qui représente un schéma de principe mécanique du capteur. Sur ce schéma, le capteur comporte deux corps élastiques E1 et E2, trois corps fluants F1, F2 et F3 et deux attaches rigides A1 et A2. Le corps élastique E1 est monté en série avec le corps fluant F1. Le corps élastique E2 est monté en série avec les corps fluants F2 et F3. Les branches formées par E1 et F1, d'une part, et par E2, F2 et F3, d'autre part, sont montées en parallèle et fixées rigidement à A1 et A2. Les corps élastiques E1 et E2 représentent respectivement la caractéristique élastique du résonateur 10 et du tube 16. Les corps fluants F1, F2 et F3 représentent respectivement la caractéristique de fluage de la couche de colle fixant le résonateur aux assises 122, de celle fixant le tube 16 aux parties 121 et du matériau constituant le tube même.

Lorsqu'une force T est appliquée sur les attaches A1 et A2 (force d'action et de réaction), cette force se décompose en deux forces T1 et T2 appliquée l'une sur la branche E1, F1, l'autre sur la branche E2, F2, F3.

Au moment de l'application de la force T, les forces T1 et T2 sont définies par l'élasticité des corps E1 et E2, les déformations à l'allongement de ces corps devant être égales puisque les deux branches sont montées en parallèle sur les attaches A1 et A2.

L'application des forces T1 sur F1 et T2 sur F2 et F3 provoque leur fluage. Il en résulte un allongement des branches E1, F1 et E2, F2, F3. Si les allongements induits par T1 sur F1 et par T2 sur F2 et F3 sont égaux, alors T1 et T2 restent constantes. Si au contraire T1 provoque un fluage plus important sur F1 que ne le fait T2 sur F2, F3, il en résulte que l'allongement dû au fluage augmente sur la branche E1, F1, aux dépens de l'allongement dû à l'élasticité, puisque l'allongement des deux branches reste constant. Cela revient à dire que T1 diminue, d'où une réduction de l'allongement élastique, comme aussi de la vitesse de fluage, celle-ci tendant asymptotiquement vers la vitesse de fluage de la branche E2, F2, F3. Il en résulte que la force T1 appliquée sur le résonateur n'est plus proportionnelle au rapport entre la résistance des corps élastiques E1 et E2, mais fait en outre intervenir la résistance des corps fluants F1, F2 et F3.

Lorsque la force T est supprimée, les corps élastiques E1 et E2 tendent à reprendre leur position de repos. Toutefois, comme l'allongement dû au fluage est plus grand sur la branche F1, E1 que sur la branche E2, F2, F3, le corps E2 sera encore en extension lorsque le corps E1 ne supportera plus de contrainte. L'équilibre sera retrouvé lorsque la force exercée par E2, due à son allongement sera compensée par la force due à la compression de E1. Les corps fluants sont ainsi soumis à une force tendant à les ramener dans leur position de départ.

La figure 3 représente une courbe de variation de fréquence en fonction du temps et de la force appliquée, dans l'hypothèse énoncée ci-dessus.

En l'absence de force appliquée, la fréquence du résonateur est égale à une valeur f0. Lorsque, à un temps t0, on applique une force T au capteur, la fréquence du résonateur augmente brusquement jusqu'à atteindre une valeur f1, à cause de l'allongement des barreaux. La fréquence diminue ensuite progressivement pour atteindre, à un temps t1, une fréquence f2 correspondant à une vitesse de fluage identique sur les deux branches E1, F1 et E2, F2, F3. Tant que les forces appliquées sur le capteur ne sont pas modifiées, la fréquence reste constante et égale à f2.

En un temps t2, la force T est supprimée. La fréquence chute brusquement pour atteindre une valeur f3. Cette dernière fréquence, inférieure à la fréquence f0, indique que les barreaux sont soumis à une compression. A cause du fluage des corps F1, F2 et F3, la fréquence du résonateur tend asymptotiquement vers f0.

La différence entre f0 et f1, égale à celle entre f3 et f2, est proportionnelle à la force T appliquée sur le capteur, le coefficient de proportionalité faisant intervenir la résistance élastique des corps E1 et E2 et non les phénomènes de fluage.

Il est ainsi théoriquement possible de mesurer la force appliquée, en mesurant la fréquence avant et juste après que la force soit appliquée ou supprimée. Mais l'application ou la suppression de la force génère des réactions dynamiques qui perturbent la mesure, de sorte que les premières valeurs mesurées sont peu précises.

En outre, il serait impossible de mesurer avec un tel dispositif une force variant dans le temps de manière aléatoire.

On sait de plus que la plaque de quartz dans laquelle le résonateur est fabriqué est si mince qu'elle susceptible de flamber sous l'effet d'une force de compression inférieure même à la force de traction maximale admissible. Cela revient à dire que si le fluage du corps F1 est important, le résonateur peut être détruit par flambage lorsque la force T est supprimée. Il ressort de ce qui précède que la vitesse de fluage du corps F1 devrait être la même que celle du corps F2 et F3 ou, ce qui serait mieux encore, qu'il n'y ait pas de fluage.

Ce problème peut être résolu par un choix adéquat des moyens d'assemblage du résonateur et du tube avec les supports, ainsi que du matériau dont est fait le tube. Il sera examiné ci-après de façon plus pratique.

Il ressort donc de ce qui précède que le fluage du tube et/ou de la colle peut provoquer une répartition des forces appliquées respectivement sur le tube et sur le résonateur qui est dans un rapport autre que celui entre les résistances élastiques du tube et des barreaux. Une modification de la répartition des forces peut également être provoquée par un changement de température, si les coefficients de dilatation du tube et du résonateur ne sont pas les mêmes. Cette modification de la répartition des forces peut être corrigée par le circuit de commande, dans la mesure où il comporte un circuit de mesure de la température. Toutefois, dans la pratique, il est souhaitable de choisir pour le tube un matériau ayant un coefficient de dilatation aussi voisin que possible de celui du matériau dont est fait le résonateur. Ce choix devra être d'autant plus rigoureux que la plage de température dans laquelle le capteur est susceptible de travailler est large.

Des essais pratiques ont été réalisés au moyen d'un quartz double diapason ayant les caractéristiques suivantes:
Dimension: 15 x 2,9 x 0,175 mm
Fréquence: 47000 Hz
Allongement: 0,46 µm/N
Rupture à la traction: 10 à 12 N
Sensibilité: 200 Hz/N
Résolution: 2000 points.

Les supports 12 sont réalisés en acier inoxydable du type Z10 CN18-8. Le diamètre des parties cylindriques est égal à 4 mm.

Le tube 16 est également réalisé en acier Z10 CN18-8. Son diamètre intérieur est de 4,01 mm, son diamètre extérieur de 4,06 mm et sa longueur égale à 21 mm. De tels tubes sont fabriqués par exemple par la maison MEDELEC (Suisse).

Un capteur comprenant ces éléments a les caractéristiques suivantes:
Dimension: 27 x 4,06 mm
Rupture à la traction: 30 N
Sensibilité: 70 Hz/N

Résolution: 2000 points.

Il ressort de la comparaison des caractéristiques du résonateur seul et du capteur que la sensibilité de ce dernier est réduite de trois fois, tandis que sa plage de mesure est élargie d'autant, la résolution n'étant pas affectée de manière sensible.

Des essais de collage du résonateur et du tube aux supports ont été réalisés au moyen d'adhésifs époxy, anaérobiques et cyano-acryliques. Les meilleurs résultats ont été obtenus avec les adhésifs cyano-acryliques. Parmi ceux-ci, on peut citer les produits vendus sous la marque Cyanolit 101, 201 et 202 de la maison 3M (USA) ou ceux vendus sous la marque Sicomet 40 et 85 de la maison HENKEL (RFA). Ce type de colle est toutefois difficilement utilisable pour la fixation du tube sur les supports, à cause de la très grande rapidité avec laquelle cette colle se polymérise. Le collage du tube sur les supports a également pu être réalisé de manière satisfaisante en utilisant des colles époxy chargées de poudre de quartz. Il est de la sorte possible d'éliminer pratiquement complètement le fluage que présentent les adhésifs époxy. Des essais pratiques d'un capteur tel que décrit ci-dessus, dans lequel le tube est fixé aux supports au moyen de l'adhésif époxy vendu sous la marque Araldit de la maison Ciba-Geigy (Suisse) mélangé à de la poudre de quartz, et dans lequel le résonateur est fixé sur ces supports au moyen de colle Sicomet 40, montrent que lorsque l'on applique à ce capteur une force de 10 à 20 N durant 300 heures, la variation de la fréquence est inférieure à 2 Hz. La sensibilité du capteur étant de 70 Hz par N, cette fluctuation équivaut à l'application d'une force de 0,03 N. Un tel résultat peut être considéré comme satisfaisant.

Le quartz et le tube pourraient aussi avantageusement être soudés aux supports. Toutefois ce mode de faire serait plus coûteux.

On a également effectué des essais en utilisant un tube réalisé en aluminium ou en magnésium. Les résultats obtenus n'étaient pas satisfaisants, à cause de la forte propension de ces matériaux au fluage.

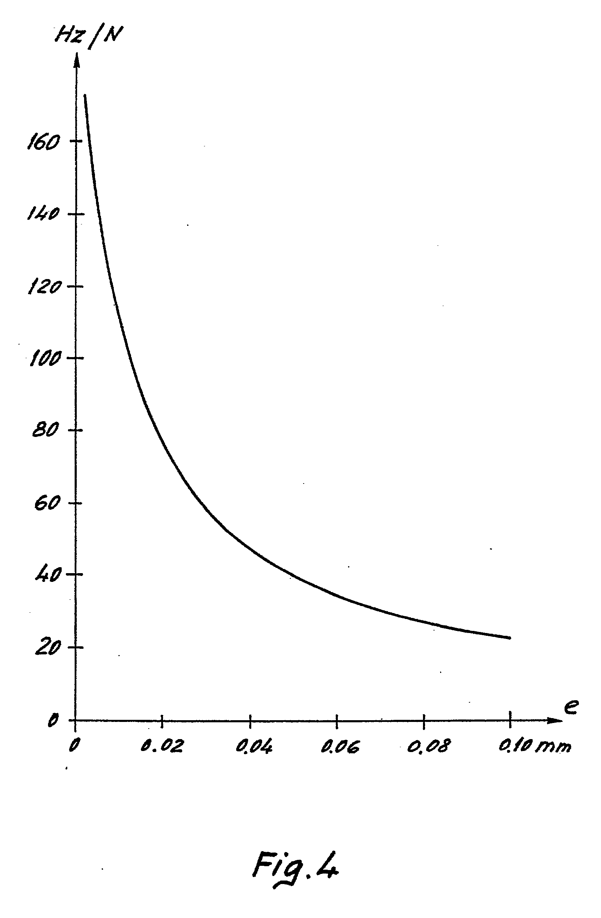

Ainsi que cela a été dit ci-dessus, les essais effectués avec le capteur tel que décrit, muni d'un tube dont l'épaisseur de paroi est égale à 0,025 mm, ont montré que la sensibilité à la traction était réduite d'un facteur trois environ (voir figure 4). La sensibilité à des efforts parasites, notamment à des forces appliquées perpendiculairement à l'axe de traction, est réduite de manière beaucoup plus sensible. Un effort parasite, tel qu'un couple de torsion ou une force perpendiculaire, appliqué au capteur, se décompose en deux composantes agissant l'une sur le tube, l'autre sur le résonateur. Cette dernière est plus de mille fois plus faible que celle agissant sur le tube. Ainsi, et grâce au fait que le capteur comporte un tube qui entoure le résonateur et est fixé aux supports, il est possible de réduire de manière très forte la sensibilité du résonateur à des efforts appliqués selon une direction autre que la direction de traction normale. De la sorte, il n'est pas nécessaire de prendre des dispositions particulières pour que la force appliquée soit parfaitement alignée selon l'axe de mesure. En outre, le fait que le quartz soit entouré d'un tube le protège des poussières et autres agressions auxquelles il peut être soumis.

Dans l'exemple ci-dessus, la sensibilité est réduite d'un facteur trois environ, par l'usage d'un tube dont les parois ont une épaisseur égale à 0,025 mm. Ainsi qu'on peut le voir sur la figure 4, la sensibilité du capteur diminue lorsque l'épaisseur des parois augmente. Pratiquement, la sensibilité est réduite d'un facteur deux environ lorsque l'épaisseur est doublée.

Ainsi que cela été dit ci-dessus, les variations de température peuvent altérer la mesure si les coefficients de dilatation du résonateur et du tube ne sont pas adaptés. Le matériau constituant le tube doit être choisi en conséquence.

Un tube réalisé en acier inoxydable Z10CN18-8 donne des résultats satisfaisants pour un capteur travaillant aux environ de la température ambiante.

Un capteur destiné à des conditions thermiques plus extrêmes comporte avantageusement un tube réalisé en un matériau ayant un coefficient de dilation pratiquement égal à celui du résonateur.

Dans une première variante, le tube est en quartz ou en verre. Elle est coûteuse et peut conduire à une fragilité exagérée du capteur.

Dans une deuxième variante, le tube 16 est en acier, de type Z12CNKDW20 par exemple, vendu par la maison AFNOR (France), dont le coefficient de dilatation est égal à $13,9 \cdot 10^{-7}$ par degré (quartz: $13,7 \cdot 10^{-7}$ par degré). De la sorte, la sensibilité à la température est fortement réduite. L'erreur restante peut être corrigée, si nécessaire, par le circuit électronique 18 qui peut avantageusement être placé à l'intérieur du tube 16, soit sur l'une des bases 103 ou 104, soit encore sur une surface aménagée que pourrait comporter l'une des assises 122.

Les essais ont été effectués avec un capteur dont l'enceinte, formée par le tube et les supports, n'est pas fermée de façon étanche. Il peut en être autrement. Ainsi, pour un capteur soumis à une atmosphère fortement polluée, il est préférable d'isoler le résonateur de peur de voir sa fréquence modifiée par les agents de pollution. Dans le cas où l'enceinte est fermée de façon étanche, la pression interne peut être réduite, ce qui améliore les conditions d'oscillation du résonateur. Il faut toutefois relever qu'une force parasite est induite sur le capteur par les variations de la pression ambiante (variations barométriques) ou de la pression à l'intérieur de l'enceinte (par échauffement par exemple).

Dans les exemples donnés, lorsque le capteur est au repos, le quartz n'est en principe pas soumis à une contrainte permanente. Il peut en être autrement, ce qui permettrait alors de décaler les limites de mesure et, par exemple, de réaliser un capteur pour des forces de compression plutôt que de traction. Pour ce faire, il suffit d'appliquer une force sur les supports 12, durant l'opération de fixation du tube.

Le résonateur décrit est fait en quartz. D'autres matériaux peuvent également être utilisés, qu'ils soient ou non piézoélectriques, sans pour autant sortir du cadre de l'invention. .

## Revendications

1. Capteur de force comportant un résonateur (10) dont la fréquence varie en fonction de l'intensité de la force à mesurer et qui comprend un barreau oscillant (101, 102) et deux embases (12, 103, 104) reliées chacune rigidement à l'une des extrémités dudit barreau (101, 102) et destinées à appliquer la force à mesurer sur ledit barreau (101, 102), caractérisé en ce que ledit capteur comporte en outre un tube (16) entourant ledit résonateur (10) et fixé rigidement par chacune de ses extrémités à l'une desdites embases (12).

2. Capteur selon la revendication 1, caractérisé en ce que ledit résonateur (10) comporte un deuxième barreau (102) également relié par ses extrémités auxdites embases (103, 104) et oscillant en opposition de phase avec ledit premier barreau (101) pour former un double diapason.

3. Capteur selon la revendication 2, caractérisé en ce que chaque embase (12, 103, 104) comporte une première partie (103, 104) venue d'une pièce avec lesdits barreaux (101, 102) et formant une base de l'un des deux diapasons formant ledit double diapason et une seconde partie constituant un support (12) pour ladite base et ledit tube (16), ledit support (12) étant fixé rigidement à ladite base et audit tube (16).

4. Capteur selon la revendication 3, caractérisé en ce que l'ensemble formé par lesdits barreaux (101, 102) et lesdites bases (103, 104) est formé d'une plaquette de quartz d'épaisseur constante et portant des électrodes (105) de commande.

5. Capteur selon la revendication 3 ou 4, caractérisé en ce que les extrémités du tube (16) et du double diapason sont respectivement collées à l'un desdits supports (12).

6. Capteur selon l'une des revendications 1 à 5, caractérisé en ce que le coefficient de dilatation thermique du tube (16) est sensiblement égal à celui dudit barreau (10).

## Patentansprüche

1. Druckaufnehmer, der einen Resonator (10) umfaßt, dessen Frequenz in Abhängigkeit der Intensität der zu messenden Kraft variiert und der aus einem oszillierenden Gitterstab (101, 102) und zwei Grundplatten (12, 103, 104) besteht, die beide fest mit je einem Ende des genannten Gitterstabs (101, 102) verbunden und dazu bestimmt sind, die zu messende Kraft an den genannten Gitterstab (101, 102) anzulegen, dadurch gekennzeichnet, daß der genannte Aufnehmer ferner ein Rohr (16) umfaßt, das den genannten Resonator (10) umhüllt und starr über jedes seiner beiden Enden an einer der genannten Grundplatten (12) befestigt ist.

2. Aufnehmer gemäß Anspruch 1, dadurch gekennzeichnet, daß der genannte Resonator (10) einen zweiten Stab (102) umfaßt, der ebenfalls über seine Enden mit den genannten Grundplatten (103, 104) verbunden ist und mit dem genannten ersten Stab (101) in entgegengesetzter Phase oszilliert und damit eine doppelte Stimmgabel bildet.

3. Aufnehmer gemäß Anspruch 2, dadurch gekennzeichnet, daß jede Grundplatte (12, 103, 104) einen ersten Teil (103, 104) umfaßt, der aus einem Stück mit den genannten Stäben (101, 102) besteht und eine Basis einer der beiden Stimmgabeln bildet, die die genannte doppelte Stimmgabel bilden, und einen zweiten Teil, der einen Halter (12) für die genannte Basis und das genannte Rohr (16) bildet, wobei der genannte Halter (12) starr mit der genannten Basis und dem genannten Rohr (16) verbunden ist.

4. Aufnehmer gemäß Anspruch 3, dadurch gekennzeichnet, daß der durch die genannten Stäbe (101, 102) und die genannten Basen (103, 104) gebildete Aufbau aus einem Steuerelektroden (105) tragenden Quarzplättchen konstanter Dicke besteht.

5. Aufnehmer gemäß Anspruch 3 oder 4, dadurch gekennzeichnet, daß die Enden des Rohres (16) und der doppelten Stimmgabel jeweils mit einem der genannten Halter (12) verklebt sind.

6. Aufnehmer gemäß einem der Ansprüche 1 bis 5, dadurch gekennzeichnet, daß der Wärmeausdehnungskoeffizient des Rohres (16) praktisch gleich dem des genannten Resonatorstabes (10) ist.

## Claims

1. A force sensor comprising a resonator (10) having a frequency which varies in function of the intensity of the force to be measured and including an oscillatory bar (101, 102), a pair of anchor members (12, 103, 104) rigidly connected each to one of the corresponding end portions of said bar (101, 102) and intended to apply the force having to be measured to the bar (101, 102), characterized in that said force sensor moreover comprises a tube (16) surrounding said resonator (10) and rigidly secured by each of its end portions to one of said members (12).

2. A force sensor as in claim 1, characterized in that said resonator (10) includes a second oscillatory bar (102) also connected by its end portions to said anchor members (103, 104) and oscillating in phase opposition with said first bar (101) to form a double tuning fork.

3. A force sensor as in claim 2, characterized in that each anchor member (12, 103, 104) includes a first portion (103, 104) which is integral with said bars (101, 102) and which forms a base for one of the two tuning forks defining said double tuning fork, and a second portion which provides a support (12) for said base and said tube (16), said support (12) being rigidly secured to said base and to said tube (16).

4. A force sensor as in claim 3, characterized in that said bars (101, 102) and said bases (103, 104) are together formed by a quartz plate of constant thickness fitted with control electrodes (105).

5. A force sensor as in claim 3 or 4, characterized in that said tube (16) and said double tuning fork have end portions that are bonded with adhesive to corresponding ones of said supports (12).

6. A force sensor as in anyone of claims 1 to 5, characterized in that the coefficient of thermal expansion of the tube (16) is substantially identical to that of said bar (10).

Fig.1

Fig.2

Fig.3

Fig.4